# FASCICULE DE BREVET EUROPEEN

(11) **EP 3 467 456 B1**
(45) Date de publication et mention de la délivrance du brevet: **02.12.2020**
(21) Numéro de dépôt: 18196698.7
(22) Date de dépôt: 25.09.2018
(51) Int. Cl.: G01G 19/56

(54) **BALANCE PLIABLE**
ZUSAMMENKLAPPBARE WAAGE
FOLDABLE WEIGHING SCALE

(30) Priorité: 06.10.2017 FR 1759402
(43) Date de publication de la demande: 10.04.2019
(73) Titulaire: SEB S.A., 69130 Ecully (FR)
(72) Inventeur: MOREL, Hervé, 74600 SEYNOD (FR); VIGUIER, Jérôme, 73410 LA BIOLLE (FR); CAREGNATO, Stéphane, 74150 BLOYE (FR)
(74) Mandataire: SEB Développement

(56) Documents cités:
- CN-A- 101 581 598
- CN-B- 102 607 686
- CN-U- 203 337 245

## Description

La présente invention concerne de manière générale une balance pliable, et en particulier l'invention concerne une balance pliable qui peut être aisément emportée par un utilisateur afin de peser ses repas pour suivre avec précision les rations alimentaires consommées.

Il est connu dans l'art antérieur des dispositifs de pesée, tels que celui divulgué dans le document JP 2012112855A qui décrit une balance portable, dont les bras se replient. En contrepartie, ce système présente notamment l'inconvénient d'être tout de même volumineux et encombrant, avec la base qui reste de grandes dimensions. De plus, les nombreuses articulations rendent cet appareil complexe et donc coûteux à fabriquer. Enfin, la stabilité de l'appareil décrit peut poser question, car c'est la base de l'appareil, de faibles dimensions, qui repose sur un support et qui peut alors basculer. On connait également des documents CN102607686, CN101581598, CN203337245 une balance pliable.

Un but de la présente invention est de répondre aux inconvénients de l'art antérieur mentionnés ci-dessus et en particulier, tout d'abord, de proposer une balance pliable qui soit aisément transportable et stable lors de l'utilisation, et qui reste aisée et bon marché à fabriquer.

Pour cela l'invention selon la revendication 1 concerne une balance pliable comprenant :
- une pièce d'articulation centrale,
- une pluralité de bras, chacun articulé par rapport à ladite pièce d'articulation centrale, de sorte à pouvoir conférer à la balance pliable un état plié dans lequel les bras sont accolés entre eux et un état déplié dans lequel la balance peut reposer sur un support et recevoir un objet à peser,
- une pluralité de capteurs de poids,
caractérisée en ce que :
- chaque bras :
   - comprend à une première extrémité un capteur de poids et un pied d'appui, de sorte à pouvoir reposer sur le support lorsque la balance est dans l'état déplié,
   - et est articulé par rapport à la pièce d'articulation centrale à une deuxième extrémité,
- la pièce d'articulation centrale comprend un pied d'appui central et un capteur de poids.

La balance pliable selon la mise en œuvre ci-dessus présente donc un état plié compact, car les bras sont repliés sur eux-mêmes, ils sont donc groupés comme ceux d'un trépied replié. De plus, dans l'état déplié, la balance est stable car les pieds d'appui sont embarqués sur les bras et sont agencés à l'extrémité opposée de la pièce d'articulation centrale, c'est-à-dire que les pieds sont en périphérie des bras dépliés. Enfin, la structure reste simple et peut rester légère, car la pièce d'articulation centrale est elle-même prévue pour être en contact avec le sol et elle est équipée d'un capteur de poids pour fournir une mesure globale fiable. En conséquence, les articulations entre les bras et la pièce d'articulation centrale n'ont pas besoin de reprendre une charge importante.

Avantageusement, chaque bras, dans l'état déplié, est agencé pour recevoir l'objet à peser. En d'autres termes, chaque bras comprend une face avec un pied d'appui (pour reposer sur le support, plan de travail ou table), et une face opposée qui reçoit l'objet à peser.

Avantageusement, la balance pliable comprend un dispositif déformable qui présente une élasticité prédéterminée, de sorte que :
- dans l'état déplié et recevant un objet à peser d'un poids inférieur à un poids prédéterminé, la balance pliable repose sur le support uniquement via les pieds d'appui des bras articulés,
- dans l'état déplié et recevant un objet à peser d'un poids supérieur ou égal au poids prédéterminé, la balance pliable repose sur le support via les pieds d'appui des bras articulés et via le pied d'appui central de la pièce d'articulation centrale. Selon cette mise en œuvre, la balance pliable comprend donc un dispositif élastique, qui permet une déformation de la structure, lorsque l'objet à peser dépasse le poids prédéterminé. En conséquence, à vide ou avec un objet léger, seuls les pieds d'appui périphériques sont en contact avec le support : l'appui est stable. Si par contre l'objet est lourd, alors la balance pliable (par le biais du dispositif déformable) se déforme et le pied d'appui central repose aussi sur le support : la structure de la balance pliable peut rester légère tout en supportant un poids important.

Avantageusement, la balance pliable comprend au moins une pièce de butée définissant une butée mécanique entre la pièce d'articulation centrale et chacun des bras, et le dispositif déformable comprend la pièce de butée. La pièce de butée peut être elle-même élastique, ou alors accouplée à un ressort qui lui permet de s'effacer lorsque le poids à supporter devient important.

Avantageusement, le dispositif déformable comprend la pièce d'articulation centrale. La pièce de butée peut être elle-même intégrée à la pièce d'articulation centrale.

Avantageusement, le dispositif déformable comprend au moins l'un des bras. On peut prévoir par exemple des bras avec une résistance à la flexion particulière, pour se déformer lorsque le poids à supporter dépasse le poids prédéterminé.

Avantageusement, chacun des bras présente une direction longitudinale, et est articulé par rapport à la pièce d'articulation centrale selon une liaison pivot qui présente un axe de pivotement sensiblement perpendiculaire à ladite direction longitudinale. La balance pliable se replie selon la cinématique d'un trépied.

Avantageusement, la balance pliable comprend trois bras.

Avantageusement, la balance pliable comprend:
- un module d'acquisition de signaux, connecté à chaque capteur de poids, et agencé pour recevoir un signal de chaque capteur de poids,
- un module de communication sans fil, connecté au module d'acquisition des signaux, et agencé pour envoyer à un appareil distant un signal représentatif du poids de l'objet à peser, ou des signaux des capteurs de poids, ou du signal de chacun des capteurs de poids. Selon cette mise en œuvre, la balance pliable comprend un module électronique pour numériser les signaux des capteurs de poids, et une unité de communication sans fil (par onde radio), pour envoyer à un appareil distant (un téléphone portable, une tablette ou un ordinateur) la mesure du poids effectuée.

Avantageusement, la balance pliable comprend :
- un module d'acquisition de signaux, connecté à chaque capteur de poids, et agencé pour recevoir un signal de chaque capteur de poids,
- un afficheur, connecté au module d'acquisition des signaux, et agencé pour afficher un poids de l'objet à peser. Selon cette mise en œuvre, la balance pliable comprend un module électronique pour numériser les signaux des capteurs de poids, et une unité d'affichage, pour afficher directement la mesure du poids effectuée.

Bien entendu, on peut prévoir aussi un module d'amplification du signal en sortie des capteurs de poids.

Avantageusement, l'afficheur est agencé du côté de la première extrémité de l'un des bras, c'est-à-dire en périphérie de la balance pliable, pour procurer une lecture aisée.

Avantageusement, chaque capteur de poids comprend :
- une plaque support,
- une jauge de contrainte fixée à la plaque support pour en mesurer une déformation élastique,
et chaque plaque support est agencée entre la balance et un des pieds d'appui.

Avantageusement, un des bras comprend un logement agencé pour recevoir au moins une batterie électrique ou une pile électrique.

Avantageusement, la pièce d'articulation centrale comprend un pont de guidage de fils électriques, et une ouverture de passage du pied d'appui central adjacente au pont de guidage. Cela permet de simplifier le moule de fabrication de la pièce d'articulation centrale.

Avantageusement, la balance pliable comprend des moyens élastiques agencés pour retenir les bras lorsque la balance pliable est dans l'état plié.

Avantageusement, les moyens élastiques comprennent au moins une patte élastique avec une portion d'indexage embarquée sur l'un des bras ou de la pièce d'articulation centrale et une portion d'accouplement avec une contre forme de la portion d'indexage est embarquée sur l'autre des bras ou de la pièce d'articulation centrale.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en perspective d'une balance pliable selon l'invention, dans un état plié,
- la figure 2 représente une vue de dessus de la balance pliable de la figure 1 dans un état déplié,
- la figure 3 représente une vue de dessous de la balance pliable dans l'état déplié,
- la figure 4 représente une vue de côté de la balance pliable dans l'état déplié, supportant un objet d'un poids inférieur à un poids prédéterminé,
- la figure 5 représente une vue de côté de la balance pliable dans l'état déplié, supportant un objet d'un poids supérieur au poids prédéterminé,
- les figures 6 et 7 représentent des parties internes de la balance pliable de la figure 1,
- la figure 8 représente un détail de la vue de dessous de la balance pliable de la figure 3,
- la figure 9 représente une plaque support et une jauge de contrainte formant un capteur de poids de la balance pliable de la figure 1.

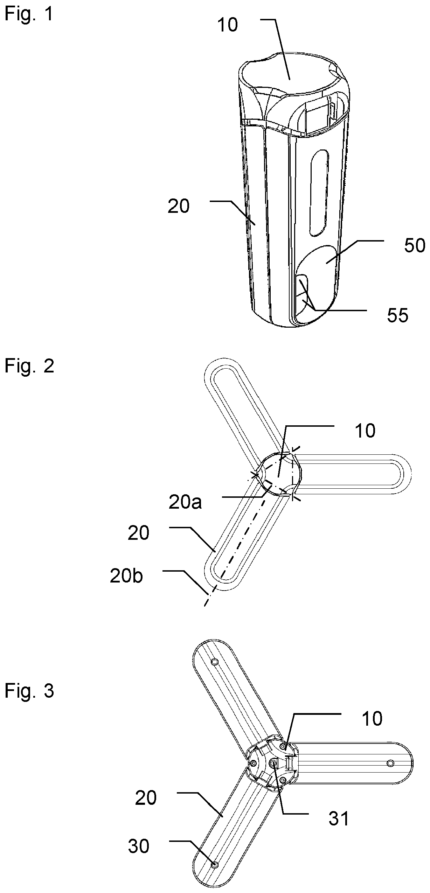

La figure 1 représente une balance pliable selon la présente invention, dans un état plié. La balance pliable comprend une pièce d'articulation centrale 10 et trois bras 20 repliés et accolés les uns aux autres. Sur la figure 1, on voit un des bras 20 qui comprend un afficheur 50, ainsi que deux boutons de commandes 55 pour permettre à un utilisateur d'effectuer des commandes (mise en fonctionnement, remise à zéro, tare...). Dans cet état plié, la balance pliable est aisément transportable dans un sac ou dans la poche de l'utilisateur.

La figure 2 représente une vue de dessus de la balance pliable de la figure 1 dans un état déplié, où on voit les trois bras 20 déployés, et chacun relié à la pièce d'articulation centrale 10 par une liaison pivot d'axe 20a, qui est sensiblement perpendiculaire à une direction longitudinale 20b du bras 20 correspondant.

La figure 3 représente une vue de dessous de la balance pliable de la figure 1 dans l'état déplié, où on voit les trois bras 20 déployés, et un pied d'appui 30 agencé à l'extrémité de chacun des bras 20. Un pied d'appui central 31 est également agencé sous la pièce d'articulation centrale 10.

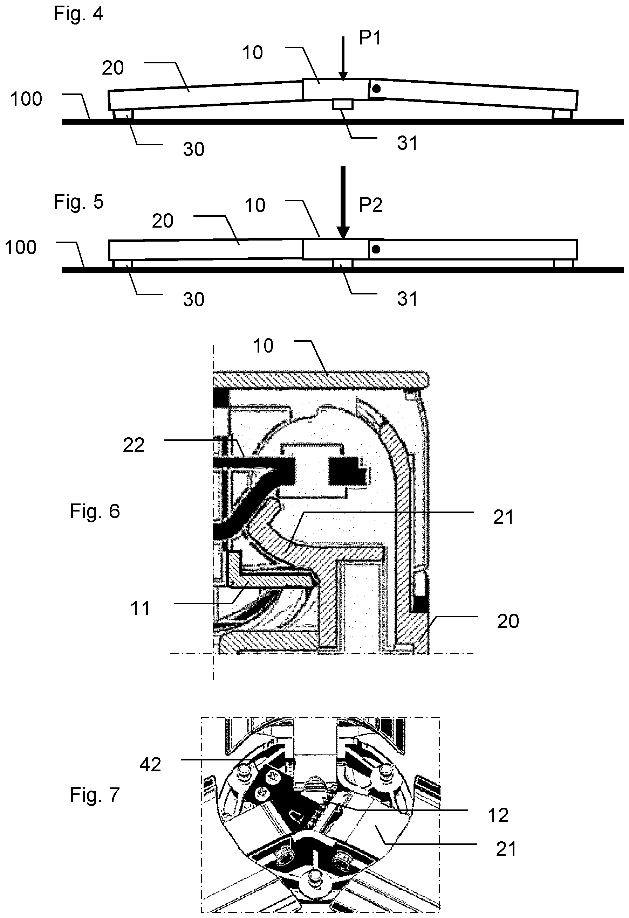

Comme le montrent les figures 4 et 5, la balance pliable, dans l'état déplié, repose sur un support 100 (une table, un plateau repas, un plan de travail...) via les pieds d'appui 30, et sous certaines conditions, via le pied d'appui central 31.

En effet, selon un aspect de l'invention, la balance pliable comprend un dispositif déformable qui garantit que si la balance pliable reçoit un objet à peser d'un poids P1 inférieur à un poids prédéterminé (par exemple 10 N, environ 1 Kg), alors seuls les pieds d'appui 30 agencés aux extrémités en périphérie des bras 20 reposent sur le support 100, comme le montre spécifiquement la figure 4. Comme la structure est celle d'un trépied, l'appui est isostatique et stable.

Par contre, si la balance pliable reçoit un objet à peser d'un poids P2 supérieur au poids prédéterminé (toujours 10 N par exemple), alors les pieds d'appui 30 agencés aux extrémités en périphérie des bras 20 reposent sur le support 100, mais également le pied d'appui central 31, comme le montre spécifiquement la figure 5, grâce au dispositif déformable. Cette mise en œuvre permet de garantir un appui stable, mais limite la complexité globale de l'appareil, car en cas d'objet lourd, alors le pied d'appui central 31 reprend aussi des efforts.

Pour obtenir ce résultat, le dispositif déformable présente une élasticité prédéterminée, et autorise une déformation de la balance pliable lorsque l'objet à peser dépasse le poids prédéterminé.

A titre d'exemple, on peut prévoir une pièce de butée dans la pièce d'articulation centrale 10, qui entre en butée avec les bras 20 en position dépliée pour définir la géométrie "à vide" de la balance pliable de la figure 4, et cette pièce de butée peut être prévue pour se déformer élastiquement (de manière réversible), afin d'autoriser la géométrie "en charge" de la figure 5. La pièce de butée peut être élastique, montée sur ressort, ou directement intégrée dans la pièce d'articulation centrale 10 (une patte élastique intégrée à la structure de la pièce d'articulation centrale 10, aisément obtenue par moulage).

On peut aussi envisager de prévoir une flexion élastique au niveau des bras 20 pour mettre en œuvre les deux géométries des figures 4 et 5.

En alternative, on peut prévoir une articulation libre ou élastique au niveau de chaque bras 20 qui serait alors réalisé en deux parties articulées. Dans cette mise en œuvre, on peut envisager une alternative très simplifiée qui consisterait à former une articulation avec un ressort de raideur quasi nulle, qui permet de laisser les bras 20 très flexibles avec la pièce d'articulation centrale 10 qui peut s'enfoncer pour être en contact avec le support, sans impacter la mesure de poids.

Pour garantir et maintenir la position des bras 20 de la balance pliable dans l'état plié de la figure 1, il est prévu une patte élastique 11 intégrée à la structure de la pièce d'articulation centrale 10, qui interagit avec une portion d'accouplement 21 des bras 20, pour procurer un effet d'emboîtement élastique (un clipsage ou encliquetage), qui garantit la position repliée des bras 20, comme le montre la figure 6.

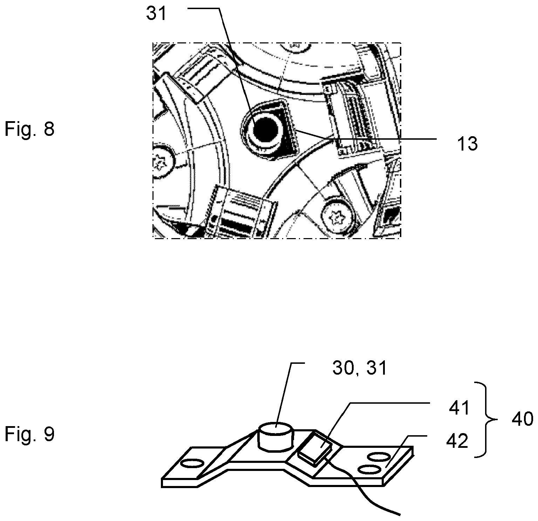

La figure 6 représente également des fils électriques 22 qui cheminent entre le bras 20 représenté et la pièce d'articulation centrale 10, et la figure 7 représente un pont de guidage 12 de la pièce d'articulation centrale 10, qui est un passe fil pour positionner de manière fiable les fils électriques 22 (non visibles figure 7 pour des raisons de clarté) au-dessus d'une plaque support 42 qui fait partie de capteurs de poids 40 dont la structure est décrite ci-dessous et à la figure 9.

La figure 8 représente le pied d'appui central 31, et une ouverture de passage 13 ménagée dans la pièce d'articulation centrale 10. Afin de simplifier la structure du moule de fabrication de cette pièce d'articulation centrale 10, un aspect de l'invention consiste à ménager un bord rectiligne à l'ouverture de passage 13 et à placer le pont de guidage 12 tangent à ce bord rectiligne.

Afin de peser de manière fiable les objets, la balance pliable comprend une pluralité de capteurs de poids 40 qui sont représentés figure 9. Chaque capteur de poids 40 comprend notamment une plaque support 42 (fixée par des vis à la structure de la balance pliable, les bras 20 ou la pièce d'articulation centrale 10) qui embarque une jauge de contrainte 41 qui mesure une déformation de la plaque support 42. En effet, cette dernière embarque aussi un pied d'appui 30 ou le pied d'appui central 31, si bien que le poids de l'objet à peser est repris par la plaque support 42 et elle se déforme (ici en flexion), la déformation étant mesurée par la jauge de contrainte 41, qui génère un signal en conséquence.

La balance pliable comprend un module électronique pour recevoir et traiter les signaux générés par chaque capteur de poids 40 de la balance pliable (par exemple un amplificateur, un convertisseur analogique-numérique, une unité de traitement et de calcul...). Il est alors possible d'afficher sur l'afficheur 50 le poids de l'objet à peser. On peut aussi, en alternative ou en complément, envoyer par liaison sans fil, un signal représentatif du poids à un appareil distant (un téléphone portable, une tablette...), pour traiter ces données dans un programme de suivi alimentaire, de régime, ou plus généralement dans un programme de suivi d'activités. Dans ce cas, le module électronique comprend aussi une unité de liaison sans fil, par onde radio, ou plus généralement électromagnétiques.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à des jauges de contrainte pour constituer les capteurs de poids, mais on peut envisager des capteurs piézoélectriques par exemple.

## Revendications

1. Balance pliable comprenant :
- une pièce d'articulation centrale (10),
- une pluralité de bras (20), chacun articulé par rapport à ladite pièce d'articulation centrale (10), de sorte à pouvoir conférer à la balance pliable un état plié dans lequel les bras (20) sont accolés entre eux et un état déplié dans lequel la balance peut reposer sur un support et recevoir un objet à peser,
- une pluralité de capteurs de poids, tel que :
- chaque bras (20) :
- comprend à une première extrémité un capteur de poids (40) et un pied d'appui (30), de sorte à pouvoir reposer sur le support lorsque la balance est dans l'état déplié,
- et est articulé par rapport à la pièce d'articulation centrale (10) à une deuxième extrémité, et **caractérisée en ce que**:
- la pièce d'articulation centrale (10) comprend un pied d'appui central (31) et un capteur de poids (40).

2. Balance pliable selon la revendication précédente, comprenant un dispositif déformable qui présente une élasticité prédéterminée, de sorte que :
- dans l'état déplié et recevant un objet à peser d'un poids inférieur à un poids prédéterminé, la balance pliable repose sur le support uniquement via les pieds d'appui (30) des bras (20) articulés,
- dans l'état déplié et recevant un objet à peser d'un poids supérieur ou égal au poids prédéterminé, la balance pliable repose sur le support via les pieds d'appui (30) des bras (20) articulés et via le pied d'appui central (31) de la pièce d'articulation centrale (10).

3. Balance pliable selon la revendication précédente, comprenant au moins une pièce de butée définissant une butée mécanique entre la pièce d'articulation centrale (10) et chacun des bras (20), dans laquelle le dispositif déformable comprend la pièce de butée.

4. Balance pliable selon l'une des revendications 2 ou 3, dans laquelle le dispositif déformable comprend la pièce d'articulation centrale (10).

5. Balance pliable selon l'une des revendications 2 à 4, dans laquelle le dispositif déformable comprend au moins l'un des bras (20).

6. Balance pliable selon l'une des revendications précédentes, dans laquelle chacun des bras (20) présente une direction longitudinale, et est articulé par rapport à la pièce d'articulation centrale (10) selon une liaison pivot qui présente un axe de pivotement sensiblement perpendiculaire à ladite direction longitudinale.

7. Balance pliable selon l'une des revendications précédentes, comprenant trois bras (20).

8. Balance pliable selon l'une des revendications précédentes, comprenant :
- un module d'acquisition de signaux, connecté à chaque capteur de poids (40), et agencé pour recevoir un signal de chaque capteur de poids (40),
- un module de communication sans fil, connecté au module d'acquisition des signaux, et agencé pour envoyer à un appareil distant un signal représentatif du poids de l'objet à peser, ou des signaux des capteurs de poids, ou du signal de chacun des capteurs de poids.

9. Balance pliable selon l'une des revendications précédentes, comprenant :
- un module d'acquisition de signaux, connecté à chaque capteur de poids (40), et agencé pour recevoir un signal de chaque capteur de poids (40),
- un afficheur (50), connecté au module d'acquisition des signaux, et agencé pour afficher un poids de l'objet à peser.

10. Balance pliable selon la revendication précédente, dans laquelle l'afficheur (50) est agencé du côté de la première extrémité de l'un des bras (20).

11. Balance pliable selon l'une des revendications précédentes, dans laquelle chaque capteur de poids (40) comprend :
- une plaque support (42),
- une jauge de contrainte (41) fixée à la plaque support (42) pour en mesurer une déformation élastique,
et dans laquelle chaque plaque support (42) est agencée entre la balance et un des pieds d'appui (30, 31).

12. Balance pliable selon l'une des revendications précédentes, dans laquelle un des bras (20) comprend un logement agencé pour recevoir au moins une batterie électrique ou une pile électrique.

13. Balance pliable selon l'une des revendications précédentes, dans laquelle la pièce d'articulation centrale (10) comprend un pont de guidage (12) de fils électriques (22), et une ouverture de passage (13) du pied d'appui central (31) adjacente au pont de guidage.

14. Balance pliable selon l'une des revendications précédentes, comprenant des moyens élastiques agencés pour retenir les bras (20) lorsque la balance pliable est dans l'état plié.

15. Balance pliable selon la revendication précédente, dans laquelle les moyens élastiques comprennent au moins une patte élastique (11) avec une portion d'indexage embarquée sur l'un des bras (20) ou de la pièce d'articulation centrale (10), et dans laquelle une portion d'accouplement (21) avec une contre forme de la portion d'indexage est embarquée sur l'autre des bras (20) ou de la pièce d'articulation centrale (10).

## Patentansprüche

1. Zusammenklappbare Waage, umfassend:
- ein zentrales Gelenkteil (10),
- eine Vielzahl von Armen (20), von dem jeder jeweils in Bezug auf das zentrale Gelenkteil (10) gelenkig ist, um der zusammenklappbaren Waage einen zusammengeklappten Zustand, in dem die Arme (20) aneinandergefügt sind, und einen aufgeklappten Zustand verleihen zu können, in dem die Waage auf einer Unterlage aufliegen kann, und einen zu wiegenden Gegenstand empfangen kann,
- eine Vielzahl von Gewichtssensoren,
sodass:
- jeder Arm (20):
- an einem ersten Ende einen Gewichtssensor (40) und ein Standbein (30) umfasst, um auf einer Unterlage aufliegen zu können, wenn die Waage in dem aufgeklappten Zustand ist,
- und in Bezug auf das zentrale Gelenkteil (10) an einem zweiten Ende gelenkig ist, und **dadurch gekennzeichnet, dass**:
- das zentrale Gelenkteil (10) ein zentrales Standbein (31) und einen Gewichtssensor (40) umfasst.

2. Zusammenklappbare Waage nach dem vorstehenden Anspruch, eine verformbare Vorrichtung umfassend, die eine vorbestimmte Elastizität aufweist, sodass:
- die zusammenklappbare Waage im aufgeklappten Zustand und bei Empfang eines zu wiegenden Gegenstands mit einem kleineren als einem vorbestimmten Gewicht nur über die Standbeine (30) der gelenkigen Arme (20) auf der Unterlage aufliegt,
- die zusammenklappbare Waage im aufgeklappten Zustand und bei Empfang eines zu wiegenden Gegenstands mit einem größeren oder gleichen Gewicht wie ein vorbestimmtes Gewicht über die Standbeine (30) der gelenkigen Arme (20) und über das zentrale Standbein (31) des zentralen Gelenkteils (10) auf der Unterlage aufliegt.

3. Zusammenklappbare Waage nach dem vorstehenden Anspruch, mindestens ein Anschlagteil umfassend, das einen mechanischen Anschlag zwischen dem zentralen Gelenkteil (10) und jedem der Arme (20) definiert, wobei die verformbare Vorrichtung das Anschlagteil umfasst.

4. Zusammenklappbare Waage nach nach einem der Ansprüche 2 oder 3, wobei die verformbare Vorrichtung das zentrale Gelenkteil (10) umfasst.

5. Zusammenklappbare Waage nach nach einem der Ansprüche 2 bis 4, wobei die verformbare Vorrichtung mindestens einen der Arme (20) umfasst.

6. Zusammenklappbare Waage nach nach einem der vorstehenden Ansprüche, wobei jeder der Arme (20) eine Längsrichtung aufweist, und in Bezug auf das zentrale Gelenkteil (10) entlang einer Schwenkverbindung gelenkig ist, die eine Schwenkachse im Wesentlichen senkrecht zur Längsrichtung aufweist.

7. Zusammenklappbare Waage nach einem der vorstehenden Ansprüche, drei Arme (20) umfassend.

8. Zusammenklappbare Waage nach einem der vorstehenden Ansprüche, umfassend:
- ein Signalerfassungsmodul, das mit jedem Gewichtssensor (40) verbunden ist und angeordnet ist, um ein Signal von jedem Gewichtssensor (40) zu empfangen,
- ein drahtloses Kommunikationsmodul, das mit dem Signalerfassungsmodul verbunden ist, und angeordnet ist, um einem entfernten Gerät ein Signal zu schicken, das repräsentativ für den zu wiegenden Gegenstand, oder die Signale der Gewichtssensoren, oder das Signal jedes der Gewichtssensoren ist.

9. Zusammenklappbare Waage nach einem der vorstehenden Ansprüche, umfassend:
- ein Signalerfassungsmodul, das mit jedem Gewichtssensor (40) verbunden ist, und angeordnet ist, um ein Signal von jedem Gewichtssensor (40) zu empfangen,
- eine Anzeige (50), die mit dem Signalerfassungsmodul verbunden ist, und angeordnet ist, um ein Gewicht des zu wiegenden Gegenstands anzuzeigen.

10. Zusammenklappbare Waage nach dem vorstehenden Anspruch, wobei die Anzeige (50) auf Seiten des ersten Endes eines der Arme (20) angeordnet ist.

11. Zusammenklappbare Waage nach einem der vorstehenden Ansprüche, wobei jeder Gewichtssensor (40) umfasst:
- eine Unterlageplatte (42),
- einen Dehnmessstreifen (41), der an der Unterlageplatte (42) befestigt ist, um eine elastische Verformung davon zu messen,
und wobei jede Unterlageplatte (42) zwischen der Waage und einem der Standbeine (30, 31) angeordnet ist.

12. Zusammenklappbare Waage nach einem der vorstehenden Ansprüche, wobei einer der Arme (20) eine Aufnahme umfasst, die angeordnet ist, um mindestens eine elektrische Batterie oder eine elektrische Zelle zu empfangen.

13. Zusammenklappbare Waage nach einem der vorstehenden Ansprüche, wobei das zentrale Gelenkteil (10) eine Führungsbrücke (12) für Stromkabel (22) und eine Durchgangsöffnung (13) für das zentrale Standbein (31) angrenzend an die Führungsbrücke umfasst.

14. Zusammenklappbare Waage nach einem der vorstehenden Ansprüche, elastische Mittel umfassend, die angeordnet sind, um die Arme (20) zurückzuhalten, wenn die zusammenklappbare Waage im zusammengeklappten Zustand ist.

15. Zusammenklappbare Waage nach dem vorstehenden Anspruch, wobei die elastischen Mittel mindestens eine elastische Lasche (11) mit einem, in eines von den Armen (20) oder dem zentralen Gelenkteil (10) eingebauten Indexierabschnitt umfassen, und wobei ein Kopplungsabschnitt (21) mit einer Gegenform zum Indexierabschnitt in das andere von den Armen (20) oder dem zentralen Gelenkteil (10) eingelassen ist.

## Claims

1. Foldable weighing scale comprising:
- a central articulation piece (10),
- a plurality of arms (20), each articulated relative to said central articulation piece (10), so as to be able to confer to the foldable weighing scale a folded state in which the arms (20) are contiguous to one another and an unfolded state in which the weighing scale can rest on a support and receive an object to be weighed,
- a plurality of weight sensors,
such that:
- each arm (20):
- comprises at a first end a weight sensor (40) and a support foot (30), so as to be able to rest on the support when the weighing scale is in the unfolded state,
- and is articulated relative to the central articulation piece (10) at a second end, and **characterised in that**:
- the central articulation piece (10) comprises a central support foot (31) and a weight sensor (40).

2. Foldable weighing scale according to the preceding claim, comprising a deformable device which has a predetermined elasticity, such that:
- in the unfolded state and receiving an object to be weighed with a weight lower than a predetermined weight, the foldable weighing scale rests on the support solely via the support feet (30) of the articulated arms (20),
- in the unfolded state and receiving an object to be weighed with a weight greater than or equal to the predetermined weight, the foldable weighing scale rests on the support via the support feet (30) of the articulated arms (20) and via the central support foot (31) of the central articulation piece (10).

3. Foldable weighing scale according to the preceding claim, comprising at least one abutment piece defining a mechanical abutment between the central articulation piece (10) and each of the arms (20), wherein the deformable device comprises the abutment piece.

4. Foldable weighing scale according to one of claims 2 or 3, wherein the deformable device comprises the central articulation piece (10).

5. Foldable weighing scale according to one of claims 2 to 4, wherein the deformable device comprises at least one of the arms (20).

6. Foldable weighing scale according to one of the preceding claims, wherein each of the arms (20) has a longitudinal direction, and is articulated relative to the central articulation piece (10) according to a pivot link which has a pivot axis substantially perpendicular to said longitudinal direction.

7. Foldable weighing scale according to one of the preceding claims, comprising three arms (20).

8. Foldable weighing scale according to one of the preceding claims, comprising:
- a signal acquisition module, connected to each weight sensor (40), and arranged to receive a signal of each weight sensor (40),
- a wireless communication module, connected to the signal acquisition module, and arranged to send to a remote device a signal representative of the weight of the object to be weighed, or signals of weight sensors, or of the signal from each of the weight sensors.

9. Foldable weighing scale according to one of the preceding claims, comprising:
- a signal acquisition module, connected to each weight sensor (40), and arranged to receive a signal from each weight sensor (40),
- a display (50), connected to the signal acquisition module, and arranged to display a weight of the object to be weighted.

10. Foldable weighing scale according to the preceding claim, wherein the display (50) is arranged on the side of the first end of one of the arms (20).

11. Foldable weighing scale according to one of the preceding claims, wherein each weight sensor (40) comprises:
- a support plate (42),
- a strain gauge (41) fixed to the support plate (42) for measuring elastic deformation,
and wherein each support plate (42) is arranged between the weighing scale and one of the support feet (30, 31).

12. Foldable weighing scale according to one of the preceding claims, wherein one of the arms (20) comprises a housing arranged to receive at least one electric battery or electric cell.

13. Foldable weighing scale according to one of the preceding claims, wherein the central articulation piece (10) comprises a guide bridge (12) for electric wires (22), and a passage opening (13) of the central support foot (31) adjacent to the guide bridge.

14. Foldable weighing scale according to one of the preceding claims, comprising elastic means arranged to retain the arms (20) when the foldable weighing scale is in the folded state.

15. Foldable weighing scale according to the preceding claim, wherein the elastic means comprise at least one elastic tab (11) with an indexing portion embedded in one of the arms (20) or the central articulation piece (10), and wherein a coupling portion (21) with a counterform to the indexing portion is embedded in the other of the arms (20) or the central articulation piece (10).
